# FASCICULE DE BREVET EUROPEEN

(11) **EP 3 674 198 B1**
(45) Date de publication et mention de la délivrance du brevet: **07.06.2023**
(21) Numéro de dépôt: 19219633.5
(22) Date de dépôt: 24.12.2019
(51) Int. Cl.: B63B 1/10, B63B 43/04

(54) **PLATEFORME NAVALE DE SUPPORT D'UNE ÉOLIENNE ET INSTALLATION NAVALE ASSOCIÉE**
MARINEPLATTFORM ALS UNTERKONSTRUKTION EINER WINDKRAFTANLAGE, UND ENTSPRECHENDE MARINEANLAGE
MARINE PLATFORM FOR SUPPORTING A WIND TURBINE AND ASSOCIATED MARINE FACILITY

(30) Priorité: 24.12.2018 FR 1874136
(43) Date de publication de la demande: 01.07.2020
(73) Titulaire: DORIS ENGINEERING, 75013 Paris (FR)
(72) Inventeur: LANGEARD, Olivier, 92160 ANTONY (FR)
(74) Mandataire: Lavoix

(56) Documents cités:
- EP-A1- 2 899 111
- WO-A1-2018/096650
- FR-A1- 3 052 817
- US-A1- 2015 071 711
- US-A1- 2016 369 780

## Description

La présente invention concerne une plateforme navale de support d'une éolienne de production d'énergie électrique en mer selon la revendication 1.

Les plateformes navales de support d'éolienne de type semi-submersible sont connues par l'homme du métier.

Dans une installation navale comprenant une telle plateforme, les coques des colonnes reçoivent une quantité de ballast choisie pour déplacer le centre de gravité de l'installation à la verticale de son centre de flottaison, afin d'assurer la position horizontale en mer de l'installation.

Ces plateformes présentent l'avantage d'être particulièrement stables.

Cependant, elles ne donnent pas entière satisfaction et leur stabilité peut encore être améliorée.

De plus, US 2016/369780, WO 2018/096650 et FR 3 052 817 décrivent des exemples de plateforme navale de support d'une éolienne.

Un objet de l'invention est donc de fournir une plateforme navale de support d'une éolienne peu chère à fabriquer tout en présentant une bonne stabilité en mer.

A cet effet, l'invention a pour objet une plateforme navale du type précité dans laquelle le volume extérieur délimité par la coque de la colonne principale est supérieur aux volumes extérieurs respectifs délimités par une surface extérieure de la coque de chaque colonne secondaire.

La plateforme navale selon l'invention peut comprendre l'une ou plusieurs des caractéristiques suivantes, prise(s) isolément ou suivant toutes combinaisons techniquement possibles :
- le volume extérieur délimité par la coque de la colonne principale est supérieur d'au moins 20%, de préférence d'au moins 50% aux volumes extérieurs respectifs délimités par la coque de chaque colonne secondaire ;
- pour chaque colonne une section transversale de la coque de la colonne présente un contour extérieur définissant une aire, l'aire définie par le contour extérieur de la section transversale de la coque de la colonne principale étant supérieure à l'aire définie par le contour extérieur de la section transversale de la coque d'au moins une colonne secondaire ;

- une section transversale de la coque de la colonne principale présente par exemple une forme géométrique différente d'une section transversale de la coque d'au moins une colonne secondaire ;
- par exemple, la section transversale de la coque de la colonne principale n'est pas homothétique à la section transversale de la coque de chaque colonne secondaire ;
- une section transversale de chaque coque des colonnes présente une forme géométrique consistant en un rectangle, par exemple présentant des sommets arrondis ou présentant des angles vifs ;
- chaque colonne s'étend respectivement suivant un axe, une section transversale de la coque de chaque colonne étant sensiblement constante le long dudit axe de la colonne ;
- la coque de la colonne principale présente une hauteur supérieure à la hauteur de la coque de chaque colonne secondaire ;
- chaque colonne secondaire est respectivement reliée à la colonne principale par l'intermédiaire d'un bras de connexion, les bras de connexion définissant entre eux un angle compris entre 50° et 80°, de préférence compris entre 50° et 75° ;
- chaque coque des colonnes secondaires délimite intérieurement des réservoirs de stockage de ballast ;
- la coque de la colonne principale délimite intérieurement des réservoirs de stockage de ballast ;
- le volume extérieur délimité par la coque de chacune des colonnes est au moins supérieur à 1500 m³ ; et
- la colonne principale s'étend jusqu'à une surface supérieure d'implantation de l'éolienne.

L'invention concerne aussi une installation navale de production d'énergie électrique en mer, comprenant une éolienne et une plateforme navale de support de cette éolienne, la plateforme navale étant telle que définie ci-dessus, la colonne principale s'étendant jusqu'à une surface supérieure d'implantation de l'éolienne sur laquelle est implantée l'éolienne.

L'invention sera mieux comprise à la lecture de la description qui va suivre, donnée uniquement à titre d'exemple, et faite en se référant aux dessins annexés, sur lesquels :
**[****Fig 1****]** La Figure 1 est une vue schématique de côté d'une installation navale selon l'invention ;
**[****Fig 2****]** la Figure 2 est une vue schématique en perspective de la plateforme navale de l'installation de la figure 1 ;
**[****Fig 3****]** la Figure 3 est une vue de dessus schématique en coupe de l'installation navale de la figure 1 ;
[Fig 4] la Figure 4 est une vue de dessus schématique en coupe d'un deuxième mode de réalisation de l'installation qui ne fait pas partie de la présente invention ; et
[Fig 5] la Figure 5 est une vue schématique de côté de la colonne principale de l'installation de la figure 4.

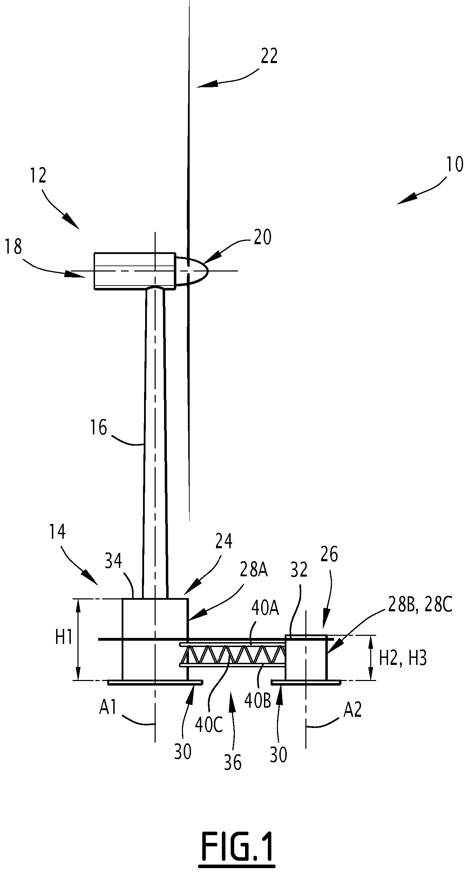

La figure 1 illustre une installation navale 10 de production d'énergie électrique en mer selon l'invention.

L'installation comprend une éolienne 12 et une plateforme navale 14 de support de cette éolienne 12.

L'éolienne 12 comprend typiquement un mât de support 16 fixé à la plateforme 14, une nacelle 18 disposée au sommet du mât 16, et un rotor 20 comportant des pales 22 et fixé sur un arbre tournant dans des paliers installés dans la nacelle 18.

Une telle éolienne 12 est connue de l'homme du métier et ne sera pas décrite plus en détail par la suite.

La plateforme navale 14 est flottante. En particulier, elle est de type semi-submersible.

La plateforme navale 14 est par exemple destinée à être disposée dans une zone où le fond marin présente une profondeur supérieure à 50 m.

La plateforme navale 14 comprend une colonne principale 24 de support de ladite éolienne 12, et deux colonnes secondaires 26.

La plateforme navale 14 est reliée au fond marin par un système d'amarrage non représenté.

Le système d'amarrage comprend par exemple au moins trois lignes d'ancrage reliant chaque colonne à une ancre disposée sur le fond marin.

La plateforme navale 14 est dans cet exemple dépourvue d'autres colonnes distinctes des colonnes principale et secondaires 24, 26.

Chaque colonne 24, 26 s'étend respectivement suivant un axe A1, A2, A3, qualifié par la suite d'axe d'extension.

Les axes d'extension A1, A2, A3 sont par exemple parallèles entre eux.

Chaque axe d'extension A1, A2, A3 s'étend en particulier sensiblement parallèlement à l'axe suivant lequel s'étend le mât 16 de l'éolienne 12.

L'axe d'extension A1, A2, A3 de chaque colonne 24, 26 est sensiblement vertical, mais son inclinaison par rapport à l'horizontal varie en fonction des conditions météorologiques comme la houle de la mer ou le vent.

Chaque colonne 24, 26 s'étend en particulier suivant son axe d'extension A1, A2, A3 entre une surface inférieure et une surface supérieure, les surfaces supérieure et inférieure étant sensiblement perpendiculaires à l'axe d'extension A1, A2, A3.

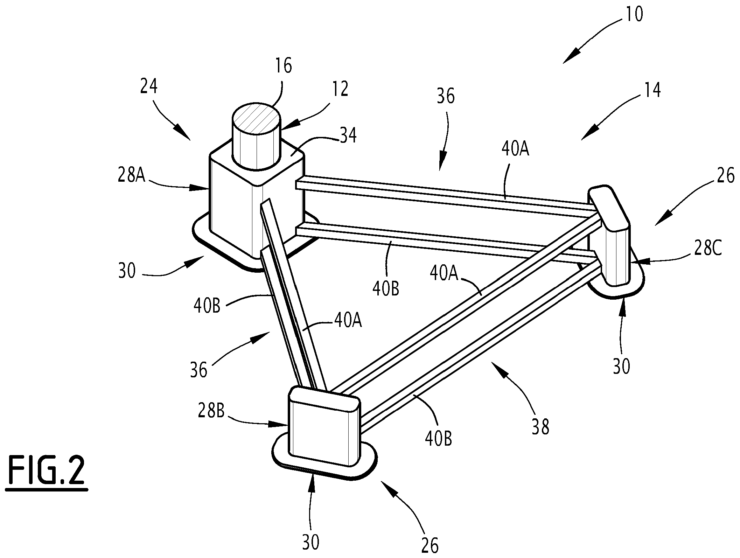

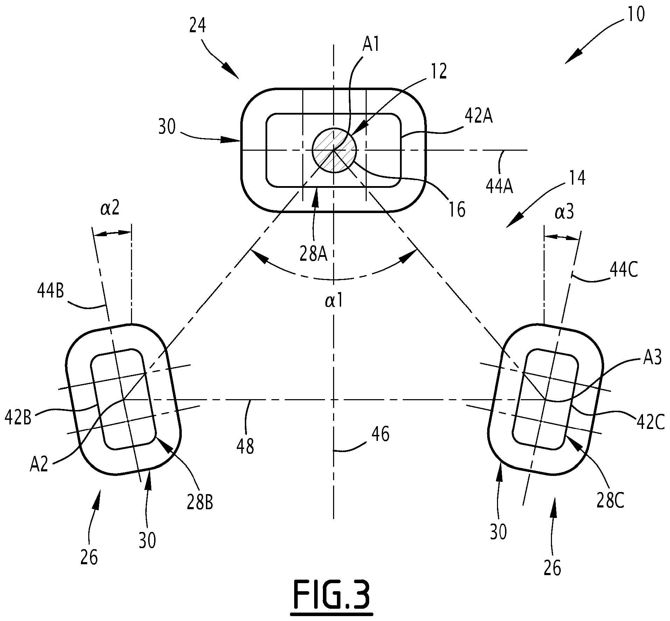

Comme illustré sur les figures 2 et 3, chaque colonne 24, 26 comprend au moins une coque 28A, 28B, 28C, et, de préférence, une jupe 30 solidaire de la coque 28A, 28B, 28C et disposée en dessous de la coque 28A, 28B, 28C.

De préférence, la jupe 30 s'étend sensiblement radialement par rapport à l'axe d'extension, et fait saillie par rapport à la coque 28A, 28B, 28C.

Des raidisseurs non représentés joignent par exemple la surface extérieure de chaque coque 28A, 28B, 28C avec la jupe 30 disposée en dessous de la coque.

Au moins une partie d'une surface extérieure de chaque coque 28A, 28B, 28C est en contact avec l'eau entourant la plateforme navale 14.

En outre, comme illustré à la figure 1, par mer calme, le plan d'eau 32 coupe les coques 28A, 28B, 28C.

En particulier, une fois l'installation 10 installée en mer, et par mer calme, au moins 10 m par exemple de la hauteur de la coque 28A de la colonne principale 24 est au-dessus du niveau de la mer.

La surface extérieure de chaque coque 28A, 28B, 28C délimite un volume qui sera désigné sous le terme de « volume extérieur » par la suite.

Le volume extérieur délimité par la coque 28A, 28B, 28C de chacune des colonnes 24, 26 est au moins supérieur à 1500 m³.

Chaque coque 28A, 28B, 28C présente une surface intérieure qui délimite aussi un volume intérieur.

Chaque coque 28A, 28B, 28C est par exemple réalisée en acier. Chaque coque 28A, 28B, 28C est alors construite par exemple en tôles raidies, et présente une épaisseur de coque par exemple comprise entre 10 mm et 30 mm.

En variante, chaque coque 28A, 28B, 28C est par exemple réalisée en béton. Chaque coque 28A, 28B, 28C est alors par exemple construite en plaques raidies, et présente une épaisseur de plaque par exemple comprise entre 150 mm et 600 mm.

La colonne principale 24 s'étend en particulier jusqu'à une surface supérieure d'implantation 34 de l'éolienne 12 sur laquelle l'éolienne 12 est implantée et fixée.

Plus précisément, le mat 16 de l'éolienne 12 présente une extrémité inférieure fixée à la surface supérieure d'implantation 34 de la colonne principale 24.

Cette surface supérieure d'implantation 34 correspond ici à une surface supérieure de la coque 28A de la colonne principale 24.

La coque 28A de la colonne principale 24 comprend par exemple intérieurement une structure de renfort de soutien de l'éolienne 12.

Chaque structure de renfort de soutien est reçue dans le volume intérieur de la coque.

Chaque structure de renfort de soutien comprend des plaques de renfort horizontales et verticales fixées à la coque 28A.

Au moins une des plaques de renfort verticales est fixée à une surface interne supérieure de la coque. De même, au moins une des plaques de renfort verticales est fixée à une surface interne inférieure de la coque.

La colonne principale 24 est ici excentrée par rapport à la plateforme 14. En particulier, comme illustré sur la figure 3, en vue de dessus, elle présente un centre géométrique décalé par rapport au centre géométrique global de la plateforme 14.

Par « centre géométrique », on entend en particulier un isobarycentre.

Etant donné qu'elle est excentrée, l'éolienne 12 est implantée plus facilement sur la colonne principale 24 par une grue, lors de l'assemblage de l'installation navale 10.

Les colonnes secondaires 26 sont aussi ici excentrées et latéralement décalées par rapport à la colonne principale 24.

La colonne principale 24 est reliée aux deux colonnes secondaires 26.

En particulier, comme illustré sur la figure 2, chaque colonne secondaire 26 est respectivement reliée à la colonne principale 24 par l'intermédiaire d'un bras de connexion 36, les bras de connexion 36 définissant entre eux un angle α1 compris entre 50° et 80°, de préférence compris entre 50° et 75°.

Les bras de connexion 36 sont par exemple de même longueur.

De plus, les colonnes secondaires 26 sont reliées l'une à l'autre par un autre bras de connexion 38, à l'écart de la colonne principale 24. Cet autre bras 38 est désigné par la suite sous le terme de « bras secondaire ».

Chaque bras 36, 38 est fixé à la surface extérieure des coques 28A, 28B, 28C.

Chaque bras 36, 38 s'étend par exemple sensiblement perpendiculairement aux axes d'extension des colonnes 24, 26.

Chaque bras 36, 38 comprend au moins une poutre.

Dans l'exemple de la figure 1, chaque bras 36, 38 comprend une poutre supérieure 40A, une poutre inférieure 40B, et de préférence des raidisseurs 40C joignant les deux poutres 40A, 40B. En variante, chaque bras 36, 38 ne comprend qu'une seule poutre.

Chaque poutre 40A, 40B s'étend longitudinalement entre deux extrémités longitudinales opposées, chaque extrémité longitudinale étant fixée à la surface extérieure d'une des coques 28A, 28B, 28C.

Chaque poutre 40A, 40B présente un diamètre par exemple compris entre 1 m et 4 m.

Chaque raidisseur 40C présente par exemple un diamètre inférieur à celui de chaque poutre 40A, 40B du bras, et de préférence compris entre 0.5 m et 3 m.

Pour des raisons de clarté, les raidisseurs joignant les deux poutres 40A, 40B n'ont pas été représentés sur la figure 2 et les bras 36, 38 n'ont pas été représentés sur la figure 3.

Les colonnes secondaires 26 sont destinées à assurer la stabilité de l'installation 10 tout en maintenant le centre géométrique le plus près possible du centre de gravité.

Pour cela, chaque coque 28B, 28C des colonnes secondaires 26 délimite intérieurement des réservoirs de stockage de ballast non représentés.

De plus, la coque 28A de la colonne principale 24 délimite intérieurement des réservoirs de stockage de ballast non représentés.

Une fois l'installation 10 disposée en mer, les réservoirs stockent du ballast, par exemple solide et/ou liquide, afin d'assurer cette fonction.

Le volume intérieur de la coque 28A, 28B, 28C de chaque colonne 24, 26 reçoit par exemple aussi des équipements de surveillance et de maintenance de la plateforme navale 14.

Dans un exemple de réalisation, les coques 28B, 28C des colonnes secondaires 26 présentent des dimensions sensiblement identiques.

En outre, pour assurer que, par mer calme, le centre de flottaison de l'installation 10 soit disposé de manière à être aligné verticalement avec son centre de gravité, les colonnes secondaires 26 sont de plus petit volume extérieur en comparaison de la colonne principale 24.

En particulier, le volume extérieur délimité par la coque 28A de la colonne principale 24 est supérieur aux volumes extérieurs respectifs délimités par la coque 28B, 28C de chaque colonne secondaire 26, comme illustré sur les figures 1 à 3.

Avantageusement, le volume extérieur délimité par la coque 28A de la colonne principale 24 est supérieur d'au moins 20%, de préférence d'au moins 50%, aux volumes extérieurs respectifs délimités par la coque 28B, 28C de chaque colonne secondaire 26.

Comme illustré sur les figures 1 et 2, la coque 28A de la colonne principale 24 présente une hauteur H1 supérieure à la hauteur H2, H3 de chaque coque 28B, 28C des colonnes secondaires 26.

Chaque hauteur est ici en particulier prise selon l'axe d'extension respectif de la colonne 24, 26.

En particulier, la coque 28A de la colonne principale 24 présente une hauteur H1 supérieure d'au moins 10%, de préférence d'au moins 20%, à la hauteur H2, H3 de la coque 28B, 28C de chaque colonne secondaire 26.

Chaque coque 28A, 28B, 28C des colonnes 24, 26 présente une section transversale, prise perpendiculaire à l'axe d'extension de la colonne, sensiblement constante selon l'axe d'extension de la colonne.

Plus précisément, pour chaque colonne 24, 26, la section transversale de la coque 28A, 28B, 28C de la colonne présente un contour extérieur 42A, 42B, 42C définissant une aire sensiblement constante selon l'axe d'extension.

Comme illustré sur les figures 2 et 3, l'aire définie par le contour extérieur 42A de la section transversale de la coque 28A de la colonne principale 24 est supérieure à l'aire définie par le contour extérieur 42B, 42C de la section transversale de la coque 28B, 28C d'au moins une, ici de chaque, colonne secondaire 26.

En particulier, l'aire définie par le contour extérieur 42A de la section transversale de la coque 28A de la colonne principale 24 est supérieure d'au moins 20%, de préférence d'au moins 50%, à l'aire définie par le contour extérieur 42B, 42C de la section transversale de la coque 28B, 28C d'au moins une, et ici de chaque, colonne secondaire 26.

Dans l'exemple de la figure 3, la section transversale de la coque 28A de la colonne principale 24 est homothétique à la section transversale de la coque 28B, 28C de chaque colonne secondaire 26.

La section transversale de chaque coque 28A, 28B, 28C présente par exemple ici une forme géométrique rectangulaire présentant des sommets arrondis.

Par « une section transversale présente une forme géométrique », on entend ici la forme géométrique du contour extérieur de cette section transversale.

L'homme du métier comprendra que la section transversale des coques peut présenter des irrégularités. Ainsi, par « la section présente une forme prédéterminée », on entend que la forme exacte du contour de ladite section ne s'écarte pas de la forme prédéterminée de plus de 20% de la dimension maximale de la forme prédéterminée, de préférence de plus de 10 % de la dimension maximale de la forme prédéterminée.

En particulier, les colonnes 24, 26 peuvent présenter extérieurement des structures annexes rapportées sur les coques 28A, 28B, 28C. De telles structures annexes sont par exemple des échelles latérales permettant l'accostage de bateaux, l'amarrage de bateaux et l'accès à la plateforme ou des garde-fous aux sommets des coques, des dispositifs d'ancrage de la plateforme et des dispositifs de raccordement électrique et de contrôle et mesure.

L'homme du métier comprendra que ces structures annexes ne modifient pas sensiblement les propriétés de flottabilité de chaque colonne.

Comme illustré sur la figure 3, pour chaque colonne 24, 26, la forme géométrique rectangulaire présente un axe de plus grande dimension, référencé 44A, 44B, 44C respectivement, passant par le centre géométrique respectif de chaque section.

Dans un exemple de réalisation, aucun axe de plus grande dimension 44B, 44C de chaque colonne secondaire 26 ne passe entre les bras 36, 38. En variante, au moins un ou chaque axe de plus grande dimension 44B, 44C passe entre les bras 36, 38.

Pour chaque colonne secondaire 26, ledit axe de plus grande dimension 44B, 44C présente un angle de décalage α2, α3 compris entre 0° et 90° avec une droite de référence référencée 46 sur la figure 3 et définie ci-après.

Au moins l'angle de décalage α2 ou α3 est compris entre 10° et 50°.

Cette droite de référence 46 est définie comme passant par le centre géométrique de la section transversale de la coque 28A de la colonne principale 24 et comme étant perpendiculaire à une droite 48 passant par les centres géométriques des sections transversales des coques 28B, 28C des colonnes secondaires 26.

Les angles de décalage α2, α3 respectifs sont ici égaux. En variante, ils sont différents.

Dans l'exemple de la figure 3, la droite de référence 46 correspond à l'axe de plus petite dimension de la coque 28A de la colonne principale 24.

De plus, l'axe de plus grande dimension 44A de la section transversale de la coque 28A de la colonne principale 24 est par exemple parallèle au bras de connexion secondaire 38.

Les axes de plus grande dimension 44B, 44C des colonnes secondaires 26 se croisent en un point d'intersection. Par exemple, en projection sur la droite de référence 46, chacune des coques 28B, 28C des colonnes secondaires 26 est disposée entre ledit point d'intersection et la coque 28A de la colonne principale 24.

Chaque angle de décalage α2, α3 est en particulier défini à l'opposé dudit point d'intersection.

Lors de la conception de la plateforme navale 14, les formes géométriques et les dimensions de la section transversale de chaque coque 28A, 28B, 28C, les hauteurs H1, H2, H3 de chaque coque, la longueur des bras de connexions 36 et 38, l'angle α1 entre les bras de connexion 36, et les angles de décalages α2, α3 définis ci-dessus sont optimisés pour assurer une stabilité optimale de l'installation 10 sous chargement de l'éolienne tout en assurant une réduction du poids de la plateforme navale 14.

Cette optimisation est par exemple mise en oeuvre par un algorithme génétique.

En variante, la coque 28A de la colonne principale 24 présente une hauteur H1 supérieure à la hauteur H2, H3 de chaque coque 28B, 28C des colonnes secondaires 26, sans que la section transversale de la coque 28A de la colonne principale 24 soit différente de celle des colonnes secondaires 26.

Dans une autre variante, l'aire définie par le contour extérieur 42A de la section transversale de la coque 28A de la colonne principale 24 est supérieure à l'aire définie par le contour extérieur 42B, 42C de la section transversale de la coque 28B, 28C de chaque colonne secondaire 26, sans que la hauteur H1 de la coque 28A de la colonne principale 24 soit supérieure à la hauteur H2, H3 de chaque coque 28B, 28C des colonnes secondaires 26.

En variante, la forme géométrique de la section transversale de chaque coque 28A, 28B, 28C des colonnes est un rectangle présentant des des angles vifs.

Dans une autre variante, la section transversale de la coque 28A de la colonne principale 24 n'est pas homothétique à celle de chaque colonne secondaire 26.

Par exemple, la section transversale de la coque 28A, 28B, 28C de chaque colonne 24, 26 peut respectivement présenter une forme géométrique rectangulaire, sans que la section transversale de la coque 28A de la colonne principale 24 soit homothétique à celle des colonnes secondaires 26.

Dans encore une autre variante, la forme géométrique de la section transversale de la coque 28A de la colonne principale 24 est différente de celle de la coque 28B, 28C d'au moins l'une des colonnes secondaires 26. Ces formes géométriques différentes sont alors aussi choisies par exemple dans le groupe ci-dessus.

En variante, non représentée, l'axe de plus grande dimension de la section transversale de la coque 28B, 28C d'au moins une colonne secondaire 26 est parallèle à ladite droite de référence 46 définie ci-dessus.

Dans une autre variante, la forme géométrique de la section transversale de la coque 28A de la colonne principale 24 est carrée. En outre, la jupe 30 de chaque colonne secondaire 26 présente par exemple une forme géométrique en hexagone, de préférence régulier, en vue de dessus. En outre, la jupe 30 de chaque colonne secondaire 26 présente par exemple une forme géométrique en cercle, en vue de dessus.

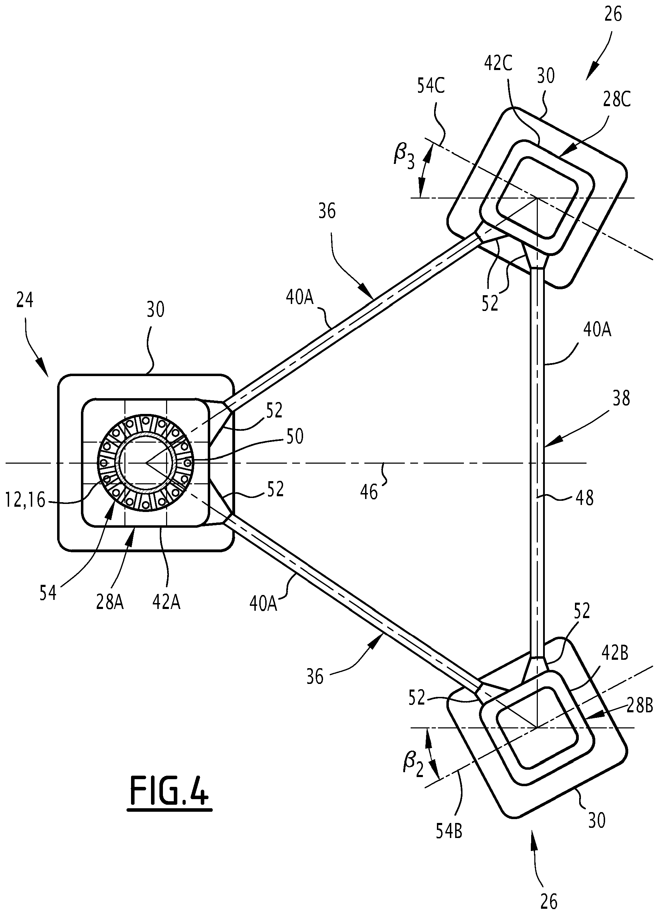

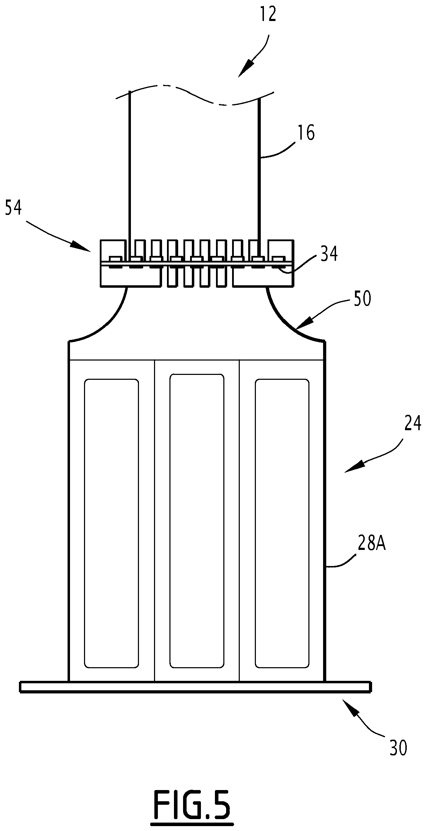

Un deuxième exemple de réalisation d'une installation navale 10 de production d'énergie électrique en mer qui ne fait pas partie de la présente invention va maintenant être décrit, en référence aux figures 4 et 5.

Seules les différences entre ce deuxième exemple de réalisation et celui des figures 1 à 3 seront décrites ci-dessous.

Dans l'exemple de la figure 4, la forme géométrique de la section transversale de chaque coque 28A, 28B, 28C des colonnes est carrée.

De plus, la jupe 30 de chaque colonne 24, 26 présente une forme géométrique carrée, en vue de dessus.

Dans le deuxième mode de réalisation, la colonne principale 24 comprend aussi une pièce de transition 50 entre le mat 16 de l'éolienne 12 et la coque 28A.

La pièce de transition 50 est fixée sur la coque 28A de la colonne principale 24.

Le mat 16 de l'éolienne 12 est fixée sur la pièce de transition 50.

La surface supérieure d'implantation 34 correspond alors à une surface supérieure de la pièce de transition 50.

En particulier, la pièce de transition 50 et le mat 16 sont fixés l'un à l'autre par un système de brides 54. Le système de brides 54 comprenant une bride solidaire de la pièce de transition 50 et une bride solidaire du mat 16.

Avantageusement, comme illustré sur la figure 5, la pièce de transition 50 présente une section transversale, prise perpendiculaire à l'axe d'extension de la colonne principale 24, variable le long de l'axe d'extension.

En particulier, la section transversale de la pièce de transition 50 diminue depuis la coque 28A vers l'extrémité inférieure du mat 16 de l'éolienne 12.

Au niveau de la coque 28A, la pièce de transition 50 présente une section transversale correspondant sensiblement à la section transversale de la coque 28A.

De plus, au niveau de l'extrémité inférieure du mat 16 de l'éolienne 12, la pièce de transition 50 présente une section transversale correspondant sensiblement à la section du mat 16.

Comme illustré sur la figure 4, pour chaque colonne secondaire 26, la forme géométrique carrée de la section présente un axe d'orientation, référencé 54B, 54C, l'axe d'orientation étant parallèle à un des côtés de la section de forme carrée, passant par le centre géométrique de la section et ne passant pas entre les bras 36, 38.

Pour chaque colonne secondaire 26, ledit axe d'orientation 54B, 54C présente un angle de décalage β2, β3 compris entre 0° et 90° avec une droite de référence référencée 46 sur la figure 3 et définie ci-après.

Avantageusement, chaque angle de décalage β2, β3 est compris entre 10° et 50°.

Cette droite de référence 46 est définie comme passant par le centre géométrique de la section transversale de la coque 28A de la colonne principale 24 et comme étant perpendiculaire à une droite 48 passant par les centres géométriques des sections transversales des coques 28B, 28C des colonnes secondaires 26.

Les angles de décalage β2, β3 respectifs sont ici égaux. En variante, ils sont différents.

Dans l'exemple de la figure 3, la droite de référence 46 est parallèle à un des côtés de la section de forme carrée de la coque 28A de la colonne principale 24.

Les axes d'orientation 54B, 54C des colonnes secondaires 26 se croisent en un point d'intersection. Par exemple, en projection sur la droite de référence 46, chacune des coques 28B, 28C des colonnes secondaires 26 est disposée entre ledit point d'intersection et la coque 28A de la colonne principale 24.

Chaque angle de décalage β2, β3 est en particulier défini à l'opposé dudit point d'intersection.

En outre, la plateforme comprend de préférence, au niveau d'au moins une des extrémités longitudinales d'au moins une des poutres 40A, 40B des bras 36, 38, un gousset 52 de transmission d'effort entre la poutre et une des colonnes 24, 26.

Avantageusement, la plateforme comprend, au niveau de chaque extrémité longitudinale de chaque poutre 40A, 40B des bras 36, 38, un tel gousset.

En particulier, chaque poutre présente une fente recevant le gousset, le gousset étant fixé à la poutre 40A, 40B et à la surface extérieure d'une des coques 28A, 28B, 28C.

Chaque gousset est plan et est par exemple réalisé en acier, de préférence dans le cas de colonnes du même matériau.

Ces goussets 52 améliorent la reprise des efforts entre les bras 36, 38 et les coques 28A, 28B et 28C.

De préférence, la plateforme comprend, au niveau d'au moins une des extrémités longitudinales d'au moins une des poutres 40A, 40B des bras 36, 38, deux goussets 52 de transmission d'effort entre la poutre 40A, 40B et une des coques 28A, 28B et 28C.

Un premier des deux goussets 52 est alors agencé sensiblement horizontal et un deuxième des deux goussets 52 est agencé sensiblement vertical.

Grâce aux caractéristiques précédemment décrites, en particulier grâce au volume extérieur de la coque 28A de la colonne principale 24 supérieur à celui des colonnes secondaires 26, le centre de flottaison peut être choisi aussi proche que l'on veut de la colonne principale 24. La stabilité de l'installation 10 en mer en est donc améliorée.

En outre, il est possible de réduire la masse de l'ensemble, notamment la masse de ballast ajoutée, pour des performances de stabilité similaires.

## Revendications

1. Plateforme navale (14) de support d'une éolienne (12) de production d'énergie électrique en mer, comprenant une colonne principale (24) de support de ladite éolienne (12), et deux colonnes secondaires (26) ;
chaque colonne comprenant au moins une coque présentant une surface extérieure délimitant un volume extérieur ; la colonne principale (24) étant reliée aux deux colonnes secondaires (26),
en vue de dessus, la colonne principale (24) étant excentrée par rapport à un centre géométrique présenté par la plateforme (14), le volume extérieur délimité par la coque (28A) de la colonne principale (24) étant supérieur aux volumes extérieurs respectifs délimités par une surface extérieure de la coque (28B, 28C) de chaque colonne secondaire (26), **caractérisée en ce que** une section transversale de chaque coque (28A, 28B, 28C) des colonnes (24, 26) présente une forme géométrique en rectangle ;
et **en ce que** la coque (28B, 28C) d'au moins une colonne secondaire (26) présente une section transversale de forme rectangulaire, la forme rectangulaire présentant un axe de plus grande dimension (44B, 44C),
l'axe de plus grande dimension (44B, 44C) présentant un angle de décalage (α2, α3) avec une droite de référence (46), la droite de référence (46) étant définie comme passant par le centre géométrique de la section transversale de la coque (28A) de la colonne principale (24) et comme étant perpendiculaire à une droite (48) passant par les centres géométriques des sections transversales des coques (28B, 28C) des colonnes secondaires (26),
l'angle de décalage (α2, α3) étant compris entre 10° et 50°.

2. Plateforme (14) selon la revendication 1, dans laquelle le volume extérieur délimité par la coque (28A) de la colonne principale (24) est supérieur d'au moins 20%, de préférence d'au moins 50% aux volumes extérieurs respectifs délimités par la coque (28B, 28C) de chaque colonne secondaire (26).

3. Plateforme (14) selon l'une quelconque des revendications 1 ou 2, dans laquelle, pour chaque colonne (24, 26), une section transversale de la coque (28A, 28B, 28C) de la colonne (24, 26) présente un contour extérieur (42A, 42B, 42C) définissant une aire, l'aire définie par le contour extérieur (42A) de la section transversale de la coque (28A) de la colonne principale (24) étant supérieure à l'aire définie par le contour extérieur (42B, 42C) de la section transversale de la coque (28B, 28C) d'au moins une colonne secondaire (26).

4. Plateforme (14) selon l'une quelconque des revendications 1 à 3, dans laquelle une section transversale de la coque (28A) de la colonne principale (24) présente une forme géométrique différente d'une section transversale de la coque (28B, 28C) d'au moins une colonne secondaire (26).

5. Plateforme (14) selon l'une quelconque des revendications 1 à 4, dans laquelle la section transversale de la coque (28A) de la colonne principale (24) n'est pas homothétique à la section transversale de la coque (28B, 28C) de chaque colonne secondaire (26).

6. Plateforme (14) selon l'une quelconque des revendications 1 à 5, dans laquelle une section transversale de chaque coque (28A, 28B, 28C) des colonnes (24, 26) présente une forme géométrique rectangulaire présentant des sommets arrondis ou présentant des angles vifs.

7. Plateforme (14) selon l'une quelconque des revendications 1 à 6, dans laquelle chaque colonne (24, 26) s'étend respectivement suivant un axe (A1, A2, A3), une section transversale de la coque (28A, 28B, 28C) de chaque colonne (24, 26) étant sensiblement constante le long dudit axe (A1, A2, A3) de la colonne (24, 26).

8. Plateforme (14) selon l'une quelconque des revendications 1 à 7, dans laquelle la coque (28A) de la colonne principale (24) présente une hauteur (H1) supérieure à la hauteur (H2, H3) de la coque (28B, 28C) de chaque colonne secondaire (26).

9. Plateforme (14) selon l'une quelconque des revendications 1 à 8, dans laquelle chaque colonne secondaire (26) est respectivement reliée à la colonne principale (24) par l'intermédiaire d'un bras de connexion (36), les bras de connexion (36) définissant entre eux un angle (α1) compris entre 50° et 80°.

10. Plateforme (14) selon l'une quelconque des revendications 1 à 9, dans laquelle chaque coque (28B, 28C) des colonnes secondaires (26) délimite intérieurement des réservoirs de stockage de ballast.

11. Plateforme (14) selon l'une quelconque des revendications 1 à 10, dans laquelle le volume extérieur délimité par la coque (28A, 28B, 28C) de chacune des colonnes (24, 26) est au moins supérieur à 1500 m³.

12. Installation navale (10) de production d'énergie électrique en mer, **caractérisée en ce qu'**elle comprend une éolienne (12) et une plateforme navale (14) de support de cette éolienne (12) suivant l'une quelconque des revendications 1 à 11, la colonne principale (24) s'étendant jusqu'à une surface supérieure d'implantation (34) de l'éolienne (12) sur laquelle est implantée l'éolienne (12).

## Patentansprüche

1. Marineplattform (14) zum Tragen einer Windkraftanlage (12) zur Erzeugung von elektrischer Energie auf See, umfassend eine Hauptsäule (24) zum Tragen der Windkraftanlage (12) und zwei Sekundärsäulen (26);
wobei jede Säule mindestens eine Schale umfasst, die eine Außenfläche aufweist, die ein Außenvolumen begrenzt; wobei die Hauptsäule (24) mit den beiden Sekundärsäulen (26) verbunden ist,
wobei die Hauptsäule (24), in Draufsicht, in Bezug auf eine geometrische Mitte, die durch die Plattform (14) dargestellt ist, exzentrisch ist, wobei das Außenvolumen, das durch die Schale (28A) der Hauptsäule (24) begrenzt wird, größer ist als die jeweiligen Außenvolumina, die durch eine Außenfläche der Schale (28B, 28C) jeder Sekundärsäule (26) begrenzt werden, **dadurch gekennzeichnet, dass** ein Querschnitt jeder Schale (28A, 28B, 28C) der Säulen (24, 26) eine geometrische Rechteckform aufweist;
und dass die Schale (28B, 28C) mindestens einer Sekundärsäule (26) einen Querschnitt mit einer rechteckigen Form aufweist, wobei die rechteckige Form eine Achse mit größerer Abmessung (44B, 44C) aufweist,
die Achse mit der größten Abmessung (44B, 44C) einen Versatzwinkel (α2, α3) zu einer Bezugsgeraden (46) aufweist, wobei die Bezugsgerade (46) so definiert ist, dass sie durch die geometrische Mitte des Querschnitts der Schale (28A) der Hauptsäule (24) verläuft und senkrecht zu einer Geraden (48) ist, die durch die geometrischen Mitten der Querschnitte der Schalen (28B, 28C) der Sekundärsäulen (26) verläuft,
wobei der Versatzwinkel (α2, α3) zwischen 10° und 50° ist.

2. Plattform (14) nach Anspruch 1, wobei das von der Schale (28A) der Hauptsäule (24) begrenzte Außenvolumen um mindestens 20 %, vorzugsweise um mindestens 50 %, größer ist als die jeweiligen von der Schale (28B, 28C) von jeder Sekundärsäule (26) begrenzten Außenvolumina.

3. Plattform (14) nach einem der Ansprüche 1 oder 2, wobei, für jede Säule (24, 26), ein Querschnitt der Schale (28A, 28B, 28C) der Säule (24, 26) eine Außenkontur (42A, 42B, 42C) aufweist, die eine Fläche definiert, wobei die durch die Außenkontur (42A) des Querschnitts der Schale (28A) der Hauptsäule (24) definierte Fläche größer ist als die durch die Außenkontur (42B, 42C) des Querschnitts der Schale (28B, 28C) von mindestens einer Sekundärsäule (26) definierte Fläche.

4. Plattform (14) nach einem der Ansprüche 1 bis 3, wobei ein Querschnitt der Schale (28A) der Hauptsäule (24) eine andere geometrische Form aufweist als ein Querschnitt der Schale (28B, 28C) von mindestens einer Sekundärsäule (26).

5. Plattform (14) nach einem der Ansprüche 1 bis 4, wobei der Querschnitt der Schale (28A) der Hauptsäule (24) nicht homothetisch mit dem Querschnitt der Schale (28B, 28C) jeder Sekundärsäule (26) ist.

6. Plattform (14) nach einem der Ansprüche 1 bis 5, wobei ein Querschnitt jeder Schale (28A, 28B, 28C) der Säulen (24, 26) eine rechteckige geometrische Form mit abgerundeten Spitzen oder mit scharfen Ecken aufweist.

7. Plattform (14) nach einem der Ansprüche 1 bis 6, wobei sich jede Säule (24, 26) jeweils entlang einer Achse (A1, A2, A3) erstreckt, wobei ein Querschnitt der Schale (28A, 28B, 28C) jeder Säule (24, 26) entlang der Achse (A1, A2, A3) der Säule (24, 26) im Wesentlichen konstant ist.

8. Plattform (14) nach einem der Ansprüche 1 bis 7, wobei die Schale (28A) der Hauptsäule (24) eine Höhe (H1) aufweist, die größer ist als die Höhe (H2, H3) der Schale (28B, 28C) jeder Sekundärsäule (26).

9. Plattform (14) nach einem der Ansprüche 1 bis 8, wobei jede Nebensäule (26) jeweils über einen Verbindungsarm (36) mit der Hauptsäule (24) verbunden ist, wobei die Verbindungsarme (36) untereinander einen Winkel (α1) zwischen 50° und 80° definieren.

10. Plattform (14) nach einem der Ansprüche 1 bis 9, wobei jede Schale (28B, 28C) der Sekundärsäulen (26) innen Ballastspeichertanks begrenzt.

11. Plattform (14) nach einem der Ansprüche 1 bis 10, wobei das von der Schale (28A, 28B, 28C) jeder der Säulen (24, 26) begrenzte Außenvolumen mindestens mehr als 1500 m³ ist.

12. Marineanlage (10) zur Erzeugung elektrischer Energie auf See, **dadurch gekennzeichnet, dass** sie eine Windkraftanlage (12) und eine Marineplattform (14) zum Tragen dieser Windkraftanlage (12) nach einem der Ansprüche 1 bis 11 umfasst, wobei sich die Hauptsäule (24) bis zu einer oberen Implementierungsfläche (34) der Windkraftanlage (12) erstreckt, auf der die Windkraftanlage (12) implementiert ist.

## Claims

1. A naval platform (14) supporting a wind turbine (12) for offshore electrical energy production, comprising a main support column (24) of said wind turbine (12), and two secondary columns (26);
each column comprising at least one shell having an outer surface delimiting an outer volume; the main column (24) being coupled to the two secondary columns (26),
seen from above, the main column (24) being off-centered relative to a geometric center of the platform (14), the outer volume delimited by the shell (28A) of the main column (24) being greater than the respective outer volumes delimited by an outer surface of the shell (28B, 28C) of each secondary column (26),
**characterized in that** a cross-section of each shell (28A, 28B, 28C) of the columns (24, 26) having a geometric shape being a rectangle;
and **in that** the shell (28B, 28C) of at least one secondary column (26) has a rectangular cross-section, the rectangular shape having a larger axis (44B, 44C),
the larger axis (44B, 44C) having an offset angle (α2, α3) with a reference line (46), the reference line (46) being defined as passing through the geometric center of the cross-section of the shell (28A) of the main column (24) and as being perpendicular to a reference line passing through the geometric centers of the cross-sections of the shells (28B, 28C) of the secondary columns (26),
the offset angle (α2, α3) being between 10° and 50°.

2. The platform (14) according to claim 1, wherein the outer volume delimited by the shell (28A) of the main column (24) is at least 20%, preferably at least 50% greater than the respective outer volumes delimited by the shell (28B, 28C) of each secondary column (26).

3. The platform (14) according to any one of claims 1 or 2, wherein, for each column (24, 26), a cross-section of the shell (28A, 28B, 28C) of the column (24, 26) has an outer contour (42A, 42B, 42C) defining an area, the area defined by the outer contour (42A) of the cross-section of the shell of the main column (24) being greater than the area defined by the outer contour (42B, 42C) of the cross-section of the shell (28B, 28C) of at least one secondary column (26).

4. The platform (14) according to any one of claims 1 to 3, wherein a cross-section of the shell (28A) of the main column (24) has a geometric shape different from a cross-section of the shell (28B, 28C) of at least one secondary column (26).

5. The platform (14) according to any one of claims 1 to 4, wherein the cross-section of the shell (28A) of the main column (24) is not homothetic to the cross-section of the shell (28B, 28C) of each secondary column (26).

6. The platform (14) according to any one of claims 1 to 5, wherein a cross-section of each shell (28A, 28B, 28C) of the columns (24, 26) has a geometric shape being a rectangle having rounded apices or having sharp corners.

7. The platform (14) according to any one of claims 1 to 6, wherein each column (24, 26) respectively extends along an axis (A1, A2, A3), a cross-section of the shell (28A, 28B, 28C) of each column (24, 26) being substantially constant along said axis (A1, A2, A3) of the column (24, 26).

8. The platform (14) according to any one of claims 1 to 7, wherein the shell (28A) of the main column (24) has a height (H1) greater than the height (H2, H3) of the shell (28B, 28C) of each secondary column (26).

9. The platform (14) according to any one of claims 1 to 8, wherein each secondary column (26) is respectively coupled to the main column (24) by means of a connecting arm (36), the connecting arms (36) defining an angle between them of between 50° and 80°.

10. The platform (14) according to any one of claims 1 to 9, wherein each shell (28B, 28C) of the secondary columns (26) inwardly delimits ballast storage reservoirs.

11. The platform (14) according to any one of claims 1 to 10, wherein the outer volume delimited by the shell (28A, 28B, 28C) of each of the columns (24, 26) is at least greater than 1500 m³.

12. A naval installation for producing offshore electrical energy, comprising a wind turbine (12) and a naval support platform (14) of this wind turbine (12) according to any one of claims 1 to 11, the main column (24) extending to an upper installation surface of the wind turbine (12) on which the wind turbine (12) is installed.
